# EUROPÄISCHE PATENTSCHRIFT

(11) **EP 4 560 278 B1**
(45) Veröffentlichungstag und Bekanntmachung des Hinweises auf die Patenterteilung: **13.05.2026**
(21) Anmeldenummer: 23211906.5
(22) Anmeldetag: 24.11.2023
(51) Int. Cl.: A63B 71/14

(54) **SCHLAGHANDSCHUH MIT DRUCKSENSOR**
IMPACT GLOVE WITH PRESSURE SENSOR
GANT À IMPACT AVEC CAPTEUR DE PRESSION

(43) Veröffentlichungstag der Anmeldung: 28.05.2025
(73) Patentinhaber: Research Industrial Systems Engineering (RISE) Forschungs-, Entwicklungs- und Grossprojektberatung GmbH, 2320 Schwechat (AT)
(72) Erfinder: HÖLBLING, Dominik, 2482 Münchendorf (AT); SEITER, Johannes, 1230 Wien (AT); GRECHENIG, Thomas, 1040 Wien (AT)
(74) Vertreter: Schwarz & Partner Patentanwälte GmbH

(56) Entgegenhaltungen:
- WO-A1-2020/041806
- DE-A1- 2 717 104
- DE-U1- 202016 004 467

## Beschreibung

Die Erfindung betrifft einen Schlaghandschuh mit einem Dämpfungskörper, einem fluidgefüllten Körper und einem bevorzugt hydrostatischen Drucksensor zur Messung des Drucks im fluidgefüllten Körper, wobei der Dämpfungskörper zwischen einer Aufprallfläche des Schlaghandschuhs und dem fluidgefüllten Körper vorliegt, wobei der Schlaghandschuh weiters eine Recheneinheit umfasst oder mit einer Recheneinheit verbindbar ist, die dazu ausgebildet ist, den vom Drucksensor gemessenen Druckmesswerten Kraftwerte zuzuordnen.

Bei Kampfsportarten treten üblicherweise zwei oder mehr Athleten in einem Ring gegeneinander an und versuchen, mittels Schlägen, Tritten oder sonstigen Körperkontakten Treffer am jeweils anderen Athleten zu landen. Beispiele für derartige Kampfsportarten, die Gegenstand dieser Beschreibung sind, sind Boxen, Karate, Kickboxen, Taekwondo, Kung Fu etc.

Zu Wettkampfszwecken aber auch für Trainings und sonstige Tests ist es wünschenswert, einen Schlag oder Tritt zu klassifizieren, z.B. indem man dem Schlag oder Tritt eine Schlagfrequenz, Beschleunigung, Kraft, einen von der Beschleunigung oder der Kraft abgeleiteten Wert, oder eine daraus kombinierte Variable, wie die Schlagtechnik zuordnet. Zur Messung der Beschleunigung sind verschiedene Varianten bekannt, z.B. mittels einer Videoauswertung der Bewegung der Athleten oder mittels eines in einem Schlaghandschuh verbauten Trägheitssensors (Inertial measurement unit, IMU). Stellvertretend werden hierfür die Schriften US 2017/134712, die US 2018/001141, die US 2012/144414 und die WO 2019/106672 genannt. Es hat sich jedoch herausgestellt, dass die gemessene, kinematische Beschleunigung nicht ausreichend ist, um einen Treffer am Körper des Gegners zu erkennen, da der schlagende Athlet seine Hand vor dem Auftreffen beispielsweise absichtlich abbremsen kann, wodurch keine oder eine nur geringe Kraft übertragen wird. Eine unmittelbare Kraftmessung wäre deshalb von Vorteil.

Beispielsweise wurden in der Studie "Walilko, T. J., Viano, D. C., & Bir, C. A. (2005). Biomechanics of the head for Olympic boxer punches to the face. British journal of sports medicine, 39(10), 710-719" Kräfte von Schlägen auf den Kopf eines Dummys gemessen. Es wäre vorteilhaft, in der Praxis auftretende Messwerte zu erhalten, um Korrelationen mit Verletzungen oder die Leistungsfähigkeit der Athleten festzustellen.

Eine unmittelbare Kraftmessung ist jedoch kaum möglich, da hierfür keine Möglichkeiten bekannt sind. Aus der Schrift WO 2020/041806 sind jedoch Schlaghandschuhe mit darin verbauten Fluidkörpern bekannt. Wird mit diesen Schlaghandschuhen ein Treffer am Gegner gelandet, wird dabei der Fluidkörper komprimiert bzw. unter Druck gesetzt. Gemäß dem Gesetz von Boyle-Mariotte steigt bei Kompression eines luftgefüllten Körpers der Innendruck umgekehrt proportional zum Volumen. Laut den Angaben in der WO 2020/041806 kann für jeden gemessenen Druckwert die für die jeweilige Trefferfläche entsprechende Kraft errechnet werden.

Zur Kalibrierung eines derartigen Schlaghandschuhes kann das in der österreichischen Patentanmeldung A 50128/2023 beschriebene Verfahren eingesetzt werden. Hierbei wird der Schlaghandschuh auf eine Kraftmessplatte beschleunigt, wobei einerseits die Druckmesswerte des Schlaghandschuhes und andererseits die von der Kraftmessplatte aufgezeichneten Kraftmesswerte korreliert werden. Dadurch kann eine Korrelationsfunktion zwischen dem gemessenen Druck und der Schlagkraft erstellt werden.

Die beschriebenen Schlaghandschuhe mit fluidgefülltem Körper und Drucksensor funktionieren bis zu einem gewissen Grad sehr gut, insbesondere in Trainingssituationen mit Boxsäcken. Im tatsächlichen Einsatz, d.h. wenn ein mit dem Boxhandschuh ausgestatteter Athlet mit einem anderen Athleten trainiert oder kämpft, kommt es jedoch ab und zu äußerst unplausiblen Messwerten, die bislang unerklärbar waren.

Aus dem Stand der Technik ist weiters die US 2011159939A1 bekannt, welche Beschleunigungssensoren mit einem Messbereich bis 8 g offenbart. Die Messwerte des Beschleunigungssensors werden ausgewertet, um daraus eine Schlagkraft zu berechnen.

Die Erfindung hat sich daher die Aufgabe gestellt, einen Schlaghandschuh mit Drucksensor zu schaffen, der zuverlässiger Messwerte liefert.

Diese Aufgabe wird durch einen Schlaghandschuh mit einem Dämpfungskörper, einem fluidgefüllten Körper und einem Drucksensor zur Messung des Drucks im fluidgefüllten Körper gelöst, wobei der Dämpfungskörper zwischen einer Aufprallfläche des Schlaghandschuhs und dem fluidgefüllten Körper vorliegt, wobei der Schlaghandschuh weiters eine Recheneinheit umfasst oder mit einer Recheneinheit verbindbar ist, die dazu ausgebildet ist, den vom Drucksensor gemessenen Druckmesswerten Kraftwerte zuzuordnen, wobei der Schlaghandschuh derart ausgebildet ist, dass die zwei in Aufprallrichtung gegenüberliegenden Seiten des fluidgefüllten Körpers berührungsfrei vorliegen, wenn der Schlaghandschuh mit der Aufprallfläche mit einer vorbestimmten Kraft, die mindestens 2,5 kN beträgt, auf einen im Wesentlichen unverformbaren Zylinder mit einem Durchmesser vom 7 cm (welcher einen durchschnittlichen Unterarm bzw. die Deckung eines Athleten darstellt) auftrifft.

Es hat sich überraschenderweise herausgestellt, dass es innerhalb des Schlaghandschuhes zu einer Kraftübertragung "durch" den fluidgefüllten Körper kommt, wenn der Schlaghandschuh auf bestimmte Objekte wie den Unterarm eines anderen Athleten trifft. Es ist eine Erkenntnis der Erfindung, dass Schlaghandschuhe des Standes der Technik ausgezeichnet funktionieren, wenn diese auf eine ebene Fläche oder einen Zylinder mit einem großen Durchmesser - wie einen Boxsack - treffen. Hintergrund hierfür ist, dass es zu einer im Wesentlichen "ebenen" und gleichmäßigen Kraftverteilung auf den Schlaghandschuh kommt, sodass die Kraft gleichmäßig auf den gesamten fluidgefüllten Körper übertragen wird. Der fluidgefüllte Körper wird hierbei im Wesentlichen gleichmäßig komprimiert, wodurch sich die beiden in Aufprallrichtung gegenüberliegenden Seiten nie berühren werden. Entsprechend wird auch der Druck im fluidgefüllten Körper erwartungsgemäß ansteigen, sodass der gemessene Druck repräsentativ für die Schlagkraft ist.

Wenn nun der Schlaghandschuh jedoch auf einen unebenen Körper trifft, kann es aufgrund der ungleichmäßigen Kraftverteilung vorkommen, dass der Körper weiter in den Schlaghandschuh "eindringt". Wenn die Kraft hinreichend groß ist, kommt es dazu, dass der fluidgefüllte Körper derart stark zusammengedrückt wird, dass sich die in Aufprallrichtung gegenüberliegenden Seiten des fluidgefüllten Körpers berühren. Dadurch wird aber auch ein Großteil der Kraft durch den fluidgefüllten Körper hindurch abgeleitet, wodurch der Druck im fluidgefüllten Körper nicht mehr repräsentativ für die Schlagkraft ist.

Es sei festgehalten, dass das eben erwähne Phänomen des derart stark zusammengequetschten fluidgefüllten Körpers nicht mit bloßem Auge ersichtlich ist, da sich erstens alle mechanischen Abläufe im Inneren des Schlaghandschuhes abspielen und zweitens, da sich die zwei gegenüberliegenden Seiten nur für einen Sekundenbruchteil berühren. Aus diesem Grund wurde bislang auch nicht verstanden, wieso der Drucksensor von bestehenden Schlaghandschuhen manchmal unplausible Ergebnisse lieferte.

Nachdem diese Erkenntnis durch den Erfinder gewonnen wurde, konnten die Randbedingungen aufgestellt werden, um einen zuverlässigeren Schlaghandschuh mit Drucksensor bereitzustellen. Einerseits hat sich gezeigt, dass es weiterhin nicht oder nur schwer möglich ist, ein Zusammenquetschen des fluidgefüllten Körpers, bis sich die gegenüberliegenden Seiten berühren, für Extremfälle wie Schläge auf eine Kegelspitze zu verhindern. Andererseits konnte ein Kompromiss gefunden werden, um die häufigsten im tatsächlichen Kampfsport auftretenden Fehlerquellen zu vermeiden, nämlich indem der Schlaghandschuh derart ausgebildet wird, dass die zwei in Aufprallrichtung gegenüberliegenden Seiten des fluidgefüllten Körpers berührungsfrei vorliegen, wenn der Schlaghandschuh mit der Aufprallfläche mit einer vorbestimmten Kraft auf eine Mantelfläche eines im Wesentlichen unverformbaren Zylinders mit einem Durchmesser vom 7 cm auftrifft. Auf Grundlage dieser erfindungsgemäßen Bedingung kann ein zuverlässigerer Schlaghandschuh bereitgestellt werden.

Der Zylinder mit einem Durchmesser von 7 cm simuliert hierbei z.B. einen Unterarm oder ein anderes Körperteil des jeweils anderen Athleten. Mit der vorgeschlagenen Lösung kam es kaum noch zu unplausiblen Messwerten des Drucksensors. Es sei festgehalten, dass mit der vorgeschlagenen Lösung natürlich auch ein Berühren der in Aufprallrichtung gegenüberliegenden Seiten des fluidgefüllten Körpers mit der genannten Schlagkraft verhindert wird, wenn ein Zylinderdurchmesser von mehr als 7 cm, beispielsweise 10 cm, eingesetzt wird. Bei einem Zylinderdurchmesser von weniger als 7 cm, z.B. 5 cm, kann hingegen ein Berühren weiterhin nicht zwingend ausgeschlossen werden, was jedoch in Kauf genommen wird, da derartig dünne Elemente im Kampfsport kaum zum Einsatz kommen. Grundsätzlich könnte der Schlaghandschuh durch Anpassung der Materialien oder anderer Eigenschaften auch noch resistenter gegen ein vollständiges Kontrahieren in longitudinaler Richtung des fluidgefüllten Körpers gemacht werden, sodass auch bei einem Zylinderdurchmesser von z.B. 5 cm ein Berühren ausgeschlossen wird. Dies kann beispielsweise erzielt werden, wenn man den Dämpfungskoeffizienten noch weiter erhöht, das Restvolumen verringert oder den Innendruck des fluidgefüllten Körpers erhöht (was jedoch nur schwer permanent umsetzbar ist).

Für die erfindungsgemäße Lösung wurde die Schlagkraft von 2,5 kN gewählt, da es bei einer derartigen Kraft bei den derzeit bekannten Schlaghandschuhen mit Drucksensor jedenfalls bei einem Schlag auf einen Zylinder wie oben spezifiziert zu einem Berühren kommt. Gleichzeitig wird diese Kraft jedoch häufig im Kampfsport erreicht, insbesondere beim Boxen. In Kenntnis der erfindungsgemäßen Problemstellung und der zugehörigen Lösung war es daher notwendig, den Schlaghandschuh derart auszulegen, dass sich die in Aufprallrichtung gegenüberliegenden Seiten des fluidgefüllten Körpers bei Aufprall auf den genannten Zylinder bei einem Schlag von 2,5 kN nicht berühren, um auch bei durch den Unterarm abgeblockten Schlägen gute Messergebnisse zu liefern.

Besonders bevorzugt ist die vorbestimmte Kraft jedoch 5 kN, da dies die höchste Schlagkraft ist, die im Schwergewichtsboxen zum Einsatz kommt, siehe die Studie von Walilko. Zwar wird auch bei dem erfindungsgemäßen Schlaghandschuh ein Berühren der in Aufprallrichtung gegenüberliegenden Seiten des fluidgefüllten Körpers bei Aufprall auf den genannten Zylinder nicht immer verhindert, wenn die Schlagkraft z.B. 10 kN beträgt, jedoch scheint dies für das vorliegende Einsatzgebiet unbedeutend zu sein.

Um eine Überdimensionierung zu verhindern, kann auch vorgesehen sein, dass der Schlaghandschuh derart ausgebildet ist, dass sich die zwei in Aufprallrichtung gegenüberliegenden Seiten des fluidgefüllten Körpers berühren, wenn der Schlaghandschuh mit der Aufprallfläche mit einer zweiten vorbestimmten Kraft, die größer als die erstgenannte vorbestimmte Kraft ist und z.B. mindestens 6 kN beträgt, auf die Mantelfläche des genannten Zylinders auftrifft. In anderen Worten gibt es einen Schwellwert, bei der sich die in Aufprallrichtung gegenüberliegenden Seiten berühren. Der Schwellwert liegt in der Regel außerhalb des im jeweiligen Anwendungsgebiet vorherrschenden Kräfte. Z.B. liegt die zweite vorbestimmte Kraft im Schwergewichtsboxen bei z.B. 5,5 kN, 6 kN oder darüber. In anderen Gewichtsklassen wie dem Mittelgewichtsboxen könnte die zweite vorbestimmte Kraft aber auch z.B. 4 kN oder 5 kN betragen.

Sobald der Fachmann mit der Lehre ausgestattet ist, dass der Schlaghandschuh derart ausgebildet werden soll, dass die zwei in Aufprallrichtung gegenüberliegenden Seiten des fluidgefüllten Körpers bei einem Schlag mit der genannten Spezifikation berührungsfrei vorliegen sollen, kann dieser geeignete Maßnahmen treffen, um diese Bedingung umzusetzen. Es versteht sich, dass es viele Maßnahmen gibt, um das genannte Berühren der in Aufprallrichtung gegenüberliegenden Seiten bei einem Schlag mit der genannten Spezifikation zu verhindern, sodass hier keine abschließende Liste von Maßnahmen angeführt werden kann.

Insbesondere kann der Fachmann jedoch die Geometrie und Anordnung des fluidgefüllten Körpers, das Volumensverhältnis des fluidgefüllten Körpers zum Restvolumen des Schlaghandschuhs, den Dämpfungskoeffizienten für eine Krafteinwirkung auf den fluidgefüllten Körper, den Ausdehnungskoeffizienten des fluidgefüllten Körpers bei einer Krafteinwirkung und oder den Innendruck des fluidgefüllten Körpers wählen, damit der Schlaghandschuh die eingangs erläuterte Eigenschaft aufweist.

Besonders bevorzugt beträgt der Dämpfungskoeffizient des Schlaghandschuhs bei einer auf die Aufprallfläche auftreffenden Kraft, die der vorbestimmten Kraft entspricht, zumindest 20 %, bevorzugt zumindest 30 %. Um einen hohen Dämpfungskoeffizienten zu erzielen, kann der Schlaghandschuh z.B. im fluidgefüllten Körper eine zusätzliche Stützstruktur (z.B. einen offenporigen Schaumstoff) umfassen, bei dem die Luft trotzdem ungehindert Richtung Drucksensor fließen kann.

Weiters bevorzugt beträgt der Ausdehnungskoeffizient des fluidgefüllten Körpers bis zu 5 %, bevorzugt bis zu 3 % oder besonders bevorzugt bis zu 1 %. Diese Werte haben sich als geeignet erwiesen, um die oben spezifizierte Eigenschaft herbeizuführen. Die angeführten Werte sind jedoch nicht zwingend, z.B. wenn die angegebene Eigenschaft durch eine Wahl der Form oder Anordnung des fluidgefüllten Körpers herbeigeführt wird. Weiters könnte der Innendruck des fluidgefüllten Körpers auf über 1 bar erhöht werden, z.B. auf zumindest 1,5 bar, zumindest 2 bar oder zumindest 4 bar. Da dies jedoch schwer permanent umsetzbar ist, werden bevorzugt die vorgenannten Maßnahmen gewählt. Weiters könnte der fluidgefüllte Körper anstelle von Luft auch mit einem anderen Medium gefüllt sein, insbesondere mit einem Fluid mit größerer Dichte als Luft. Dadurch würde sich dann das Druckverhältnis im fluidgefüllten Körper bei Kompression anders verhalten, was auch die untenstehenden Formeln verändern würde.

An dieser Stelle soll noch erwähnt werden, dass es gemäß der bisherigen Auffassung vorteilhaft war, den Dämpfungskoeffizienten besonders gering zu halten, da erwartet wird, dass es bei einem geringen Dämpfungskoeffizienten zu einer unmittelbareren Druckübertragung auf den fluidgefüllten Körper kommt. Erfindungsgemäß wurde jedoch festgestellt, dass hoher Dämpfungskoeffizient wie oben beschrieben aus anderen Gründen vorteilhaft ist.

Besonders bevorzugt ist, wenn der Schlaghandschuh derart ausgebildet ist, dass die zwei in Aufprallrichtung gegenüberliegenden Seiten des fluidgefüllten Körpers mit einem Abstand von zumindest 1 mm oder zumindest 3 mm vorliegen, wenn der Schlaghandschuh mit der Aufprallfläche auf den genannten Zylinder mit der vorbestimmten Kraft auftrifft. Dadurch können auch noch höhere Kräfte aufgenommen werden, ohne dass sich die gegenüberliegenden Seiten des fluidgefüllten Körpers berühren, d.h. es wird ein noch fehlerunanfälligerer Schlaghandschuh geschaffen. Um diesen Abstand zu ermitteln, kann beispielsweise eine Computersimulation des Schlaghandschuhs durchgeführt werden oder es können die in der Figurenbeschreibung angeführten Formeln herangezogen werden.

In einer besonders bevorzugten Ausführungsform umfasst der Schlaghandschuh einen Hochbeschleunigungssensor, mit dem kinetische Beschleunigungsmesswerte von zumindest 64 g (wobei 1 g = 9,81 m/s² ist) in alle 3 orthogonalen Raumrichtungen (6 Richtungen) messbar sind. Es hat sich herausgestellt, dass messende Schlaghandschuhe nach dem aktuellen Stand der Technik Beschleunigungssensoren beinhalten, die unter Umständen ein Teil von IMUs sind und nur bis maximal 8 g (z.B. US2011159939A1) oder 16g messen können. Hier kommt es oft zu einer Überbeanspruchung im Sinne einer Messbereichsüberschreitung von mehreren Achsen, insbesondere bei der Bremsbeschleunigung während des Auftreffens am Ziel. In dem Fall gibt der herkömmliche Beschleunigungssensor den Messbereichsendwert aus, aber nicht den aktuell realen Beschleunigungsmesswert. Ohne diese Bremsbeschleunigung gibt es jedenfalls eine erhebliche zusätzliche Ungenauigkeit, da entweder die "Vorbewegung" vor Start des Schlagevents (durch Änderung dieser Geschwindigkeit) nicht bekannt ist (wodurch keine Kraftübertragung auf das Ziel berechnet werden kann). Zudem wird bei einer kontinuierlichen Messung der erwähnte entstehende Messfehler dauerhaft akkumuliert und über die Zeit zu einer relevant hohen Ungenauigkeit führt. Die Messwerte des Hochbeschleunigungssensors können somit unter anderem zu einer deutlich genaueren Schlagverfolgung eingesetzt werden.

Ein weiterer Vorteil des Hochbeschleunigungssensors ist, dass in der Folge die genannte Recheneinheit oder eine weitere Recheneinheit (die sich auch im Handschuh oder extern dazu, z.B. in der Cloud, befinden kann) dazu ausgebildet sein kann, aus Messwerten des Hochbeschleunigungssensors während eines Aufpralls zusammen mit einer geschätzten effektiven Masse einen Referenzwert für die Schlagkraft zu bestimmen. In der Folge kann die genannte Recheneinheit oder die weitere Recheneinheit beispielsweise dazu ausgebildet sein, den über den Drucksensor bestimmten Kraftwert als Schlagkraft auszugeben, wenn der über den Hochbeschleunigungssensor ermittelte Referenzwert innerhalb einer Toleranz von 10 %, 20 % oder 30 % des über den Drucksensor bestimmten Kraftwerts liegt, und den Referenzwert als Schlagkraft auszugeben, wenn der Referenzwert außerhalb der genannten Toleranz liegt. Alternativ oder zusätzlich kann der Referenzwert auch zur Validierung des Schlaghandschuhes herangezogen werden, siehe unten. Unter Validierung wird hierin verstanden, dass festgestellt wird, ob der Schlaghandschuh die erfindungsgemäßen Eigenschaften aufweist, d.h. ob die zwei in Aufprallrichtung gegenüberliegenden Seiten des fluidgefüllten Körpers berührungsfrei vorliegen, wenn der Schlaghandschuh mit der Aufprallfläche mit einer vorbestimmten Kraft, die mindestens 2,5 kN beträgt, auf eine Mantelfläche eines im Wesentlichen unverformbaren Zylinders mit einem Durchmesser von 7 cm auftrifft.

Besonders bevorzugt ist weiters, wenn der Schlaghandschuh eine inertiale Messeinheit mit einem Beschleunigungssensor umfasst, wobei die inertiale Messeinheit bzw. der (Normal-) Beschleunigungssensor bevorzugt gesondert zum Hochbeschleunigungssensor vorliegt, und wobei die genannte Recheneinheit oder eine weitere Recheneinheit bevorzugt dazu ausgebildet ist, die Messwerte der inertialen Messeinheit heranzuziehen. Der Hochbeschleunigungssensor kann insbesondere dazu eingesetzt werden, um die Beschleunigungsspitze während eines Aufpralls zu messen, woraus eine Schlagkraft abgeschätzt werden kann. Eine derart ermittelte Schlagkraft kann mit einer von der Recheneinheit auf Basis der Druckdaten ermittelten Schlagkraft verglichen werden, siehe unten. Wenn der Hochbeschleunigungssensor von der IMU gesondert ist, hat dies den Vorteil, dass dieser nur beim Aufprall hinzugeschalten werden muss, wodurch der Energiebedarf reduziert werden kann.

In einem weiteren Aspekt schafft die Erfindung ein Verfahren zum Validieren eines Schlaghandschuhes mit einem Dämpfungskörper, einem fluidgefüllten Körper und einem Drucksensor zur Messung des hydrostatischen Drucks im fluidgefüllten Körper (bevorzugt zum Validieren eines Schlaghandschuhes nach einem der Ansprüche 1 bis 4), umfassend die Schritte:
- numerisches oder empirisches Ermitteln eines erwarteten Drucks, der im fluidgefüllten Körper erwartet wird, wenn der Schlaghandschuh mit der genannten vorbestimmten Kraft auf den genannten Zylinder auftrifft,
- Schlagen des Schlaghandschuhes mit der genannten vorbestimmten Kraft auf den genannten Zylinder und Messen des Drucks im fluidgefüllten Körper, und
- Vergleichen, ob der gemessene Druck im Wesentlichen dem erwarteten Druck entspricht.

Wenn im Schritt des Vergleichens festgestellt wird, dass der gemessene Druck im Wesentlichen dem erwarteten Druck entspricht, kann darauf geschlossen werden, dass sich die in Aufprallrichtung gegenüberliegenden Seiten des fluidgefüllten Körpers nicht berührt haben, d.h. es handelt sich um einen erfindungsgemäßen Schlaghandschuh wie oben spezifiziert.

In einer ersten bevorzugten Variante umfasst der Schritt des numerischen Ermittelns des erwarteten Drucks folgende Schritte:
- Schätzen eines Dämpfungskoeffizienten des Schlaghandschuhs, der erwarteten Aufprallfläche des Zylinders auf dem fluidgefüllten Körper und optional auch eines Ausdehnungskoeffizienten des fluidgefüllten Körpers umfasst,
- Ermitteln des erwarteten Drucks anhand der Formel p = F(1-c+β)/A, wobei F die vorbestimmte Kraft, c der Dämpfungskoeffizient, β der Ausdehnungskoeffizient und A die erwartete Aufprallfläche des Zylinders auf dem fluidgefüllten Körper ist. Es versteht sich, dass der Dämpfungskoeffizient und der Ausdehnungskoeffizient je nach Material eine Funktion in Abhängigkeit der Zug- bzw. Druckkraft sein können.

Dies hat den Vorteil, dass keine Referenzschläge (d.h. empirisches Ermitteln) notwendig sind, wodurch das Validieren schneller durchgeführt werden kann. Das Schätzen der genannten Werte gemäß den Erfahrungswerten des Fachmannes ist zum Validieren ausreichend, da ein gemessener Druckwert weitaus ungenauer sein wird, wenn sich die gegenüberliegenden Seiten des fluidgefüllten Körpers während des Schlages berühren.

In einer zweiten bevorzugten Variante umfasst der Schritt des empirischen Ermittelns des erwarteten Drucks folgende Schritte:
- Schlagen des Schlaghandschuhes mit der genannten Kraft auf eine ebene Fläche und Messen des Drucks im fluidgefüllten Körper zum Erhalt des erwarteten Drucks.

Dies hat den Vorteil, dass ein eindeutiger Referenzwert gewonnen werden kann, von dem mit einer äußerst hohen Wahrscheinlichkeit ausgegangen werden kann, dass sich die gegenüberliegenden Seiten des fluidgefüllten Körpers während des Schlages nicht berühren, da dies die flächigen Ebenen selbst bei Schlaghandschuhen nach dem Stand der Technik der Fall sein wird.

In einer dritten bevorzugten Variante umfasst der Schritt des empirischen Ermittelns des erwarteten Drucks folgende Schritte:
- Schlagen des Schlaghandschuhes mit der einer Testkraft auf den genannten Zylinder, wobei die Testkraft geringer als die vorbestimmte Kraft ist, bevorzugt geringer als 4 kN, geringer als 3 kN, geringer als 2 kN oder geringer als 1 kN, und Messen des Drucks im fluidgefüllten Körper zum Erhalt eines Testdruckmesswertes,
- Ermitteln des erwarteten Drucks auf Basis des Testdruckmesswerts.

Dies hat den Vorteil, dass dieselbe Schlagoberfläche bei Referenzschlag und beim eigentlichen Testschlag eingesetzt werden kann, und es ist kein Wechseln der Schlagoberfläche notwendig. Hierbei wird von einer kleinen Kraft ausgegangen, bei der davon ausgegangen wird, dass sich die gegenüberliegenden Seiten des fluidgefüllten Körpers während des Schlages nicht berühren. Der Zusammenhang zwischen dem Testdruckmesswert und des erwarteten Drucks kann vorab durch Versuche mit einem bereits validierten Schlaghandschuh bestimmt werden. Im einfachsten Fall kann eine lineare Relation angenommen werden (wenn die vorbestimmte Kraft doppelt so groß ist wie die Testkraft, sollte der erwartete Druck doppelt so groß wie der Testdruckmesswert sein), wobei dieses Verfahren jedoch keineswegs hierauf eingeschränkt ist und auch andere Relationen herangezogen werden können.

In einer vierten bevorzugten Variante des empirischen Ermittelns kann der Schlaghandschuh einen Hochbeschleunigungssensor umfassen, mit dem Beschleunigungsmesswerte von zumindest 64 g messbar sind, wobei aus Messwerten des Hochbeschleunigungssensors während eines Aufpralls, d.h. während der Entschleunigung, zusammen mit einer geschätzten effektiven Masse ein Referenzwert bestimmt wird, und wobei der Schritt des empirischen Ermitteln des erwarteten Drucks das Bestimmen des Referenzwertes während dem Schritt des Schlagens mit der genannten Kraft von z.B. 2,5 kN oder 5 kN auf den genannten Zylinder umfasst. Der Referenzwert ist ein Kraftwert und kann mit einer geschätzten oder berechneten Aufprallfläche in den erwarteten Druck umgerechnet werden. Dies hat den Vorteil, dass ein empirisches Ermitteln auch während desselben Schlages stattfinden kann.

Vorteilhafte und nicht einschränkende Ausführungsformen der in den Ansprüchen wiedergegebenen Erfindung werden nachfolgend anhand der Zeichnungen näher erläutert.
Figur 1 zeigt einen Schlaghandschuh zur Kraftmessung in einer schematischen Ansicht mit den im Inneren des Schlaghandschuhes befindlichen Komponenten.
Figur 2 zeigt einen Schlaghandschuh während eines Schlages auf eine ebene Fläche vor dem Aufprallzeitpunkt.
Figur 3 zeigt einen Schlaghandschuh während eines Schlages auf eine ebene Fläche zum Aufprallzeitpunkt.
Figur 4 zeigt einen Schlaghandschuh gemäß dem Stand der Technik während eines Schlages auf einen Zylinder mit einem Durchmesser von 7 cm mit einer Schlagkraft von 5 kN zum Aufprallzeitpunkt.
Figur 5 zeigt einen erfindungsgemäßen Schlaghandschuh während eines Schlages auf einen Zylinder mit einem Durchmesser von 7 cm mit einer Schlagkraft von 5 kN zum Aufprallzeitpunkt.
Figur 6 zeigt einen Prüfstand zum Validieren eines Schlaghandschuhes zur Kraftmessung.
Die Figuren 7, 8 und 9 zeigen die bei einem Aufprall auftretenden Beschleunigungskurven bei einem Schlaghandschuh entlang einer x-Achse (Figur 7), einer y-Achse (Figur 8) und einer z-Achse (Figur 9). In den Darstellungen ist der Messwert in g eingetragen und nicht in m/s², wobei 1 g = 9,81 m/s² angenommen ist.
Figur 10 zeigt einen Schlaghandschuh, dessen fluidgefüllter Körper eine Stützstruktur umfasst.

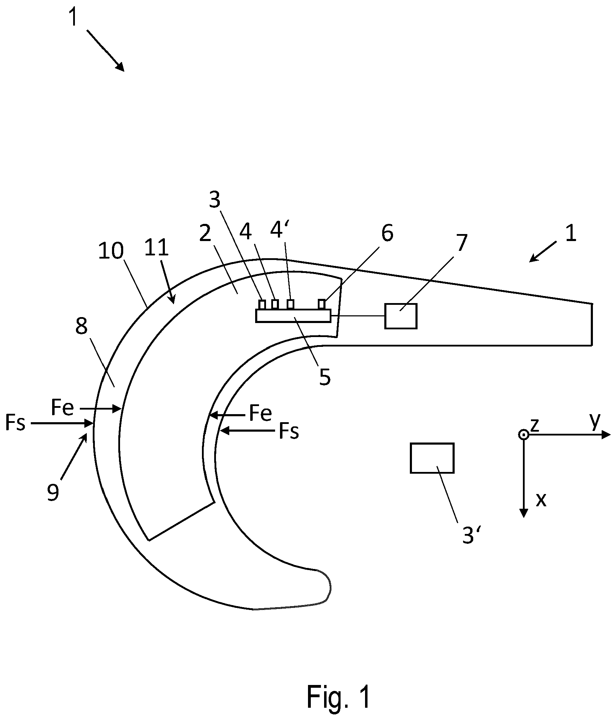

Figur 1 zeigt einen Schlaghandschuh 1, der einen fluidgefüllten Körper 2 (auch "Pad" genannt) umfasst. Der fluidgefüllte Körper 2 besteht aus einer verformbaren Hülle, die mit einem Fluid, insbesondere einem Gas wie Luft oder auch einer Flüssigkeit, gefüllt ist. Im Inneren des fluidgefüllten Körpers 2 befindet sich zudem ein Drucksensor 3, der den hydrostatischen Druck innerhalb des fluidgefüllten Körpers misst und z.B. an eine Recheneinheit 3' weiterleitet, die sich innerhalb oder außerhalb des Schlaghandschuhes 1 befinden kann. Die Recheneinheit 3' kann vom Drucksensor 3 gemessene Druckmesswerte in Kraftmesswerte umrechnen, sodass die Schlagkraft des Schlaghandschuhes 1 ermittelbar ist. Die Recheneinheit 3' kann sich innerhalb oder außerhalb des Körpers des Schlaghandschuhes 1 befinden.

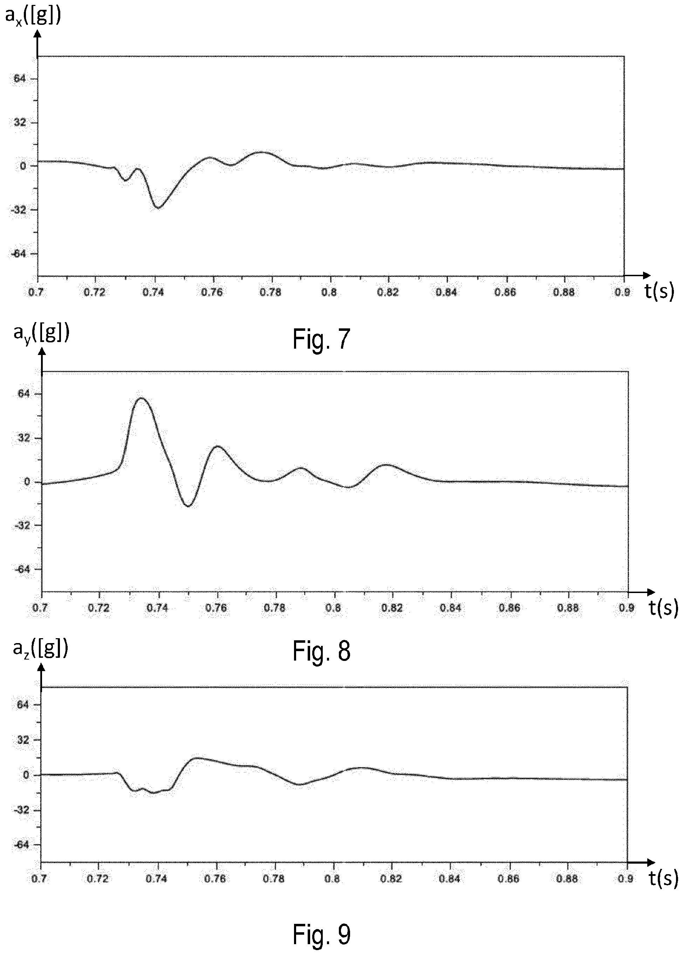

In einer Variante kann zur Umsetzung des genannten Aufbaus eine Elektronikplatine 5 im Inneren des fluidgefüllten Körpers 2 vorgesehen sein, auf der sich neben dem genannten Drucksensor 3 auch eine inertiale Messeinheit (Inertial Measurement Unit, IMU) 4, ein für besondere Auswertungen vorsehbarer Hochbeschleunigungssensor 4' (siehe unten die Figuren 7 bis 9), eine Recheneinheit mit interner oder externer Übertragungseinheit 6 (z.B. zur Kommunikation mit der Recheneinheit 3') befinden kann. Die Elektronikplatine 5 befindet sich in der Regel teilweise oder vollständig im Inneren des fluidgefüllten Körpers und kann über ein Kabel mit einer Batterie 7 verbunden sein, die sich außerhalb des fluidgefüllten Körpers 2 befindet. Es versteht sich, dass noch weitere Varianten möglich sind. Beispielsweise könnte die Batterie auch im fluidgefüllten Körper 2 vorliegen und die Elektronikplatine 5 könnte eingemoldet sein. Auch muss das Gerät nicht drahtlos ausgeführt werden, wenn z.B. Hardwareschnittstellen vorliegen. Weiters könnte der Hochbeschleunigungssensor 4' Teil der IMU sein und es liegt kein zusätzlicher Hochbeschleunigungssensor 4' vor.

Weiters umfasst der Schlaghandschuh 1 einen Dämpfungskörper 8, der zwischen einer Aufprallfläche 9 des Schlaghandschuhs 1 und dem fluidgefüllten Körper 2 vorliegt. Der Dämpfungskörper 8 setzt sich üblicherweise zusammen aus einer Außenhülle 10 und einem Schaumstoffkörper 11. Die Außenhülle 10 ist in den meisten Fällen eine Lederschicht oder eine Kunstlederschicht, d.h. eine Kunststofflage. Eine Seite der Außenhülle 10 bildet die Aufprallfläche 9 und an der anderen Seite der Außenhülle 10 befindet sich der Schaumstoffkörper 11. Der Schaumstoffkörper 11 beabstandet den fluidgefüllten Körper 2 von der Außenhülle 10.

Die Aufprallfläche 9 ist hierbei im Wesentlichen die Frontalfläche (konvexe Seite vor der Handflächenverlängerung) des Schlaghandschuhs 1, mit der üblicherweise mit einem Faustschlag geschlagen wird, wie in Figur 1 dargestellt. Die Aufprallfläche 9 könnte sich aber auch am Handrücken oder an einer anderen Stelle des Schlaghandschuhs 1 befinden, wobei der fluidgefüllte Körper 2 entsprechend anders ausgestaltet ist.

Der Dämpfungskörper 8 hat die Wirkung, dass eine eintreffende Schlagkraft Fs (bzw. die durch den Schlaghandschuh 1 ausgeübte Kraft) um einen gewissen Faktor reduziert wird und der fluidgefüllte Körper 2 in der Folge eine geringere effektive Kraft Fe erfährt. Man spricht hierbei vom sogenannten Dämpfungskoeffizienten c des Schlaghandschuhs 1. Dies ist in Figur 1 dargestellt, in der an der Innenseite des Schlaghandschuhes 1 eine durch die Hand des Athleten ausgeübte Schlagkraft Fs und an der außenliegenden Aufprallfläche 9 die gegengleiche Kraft Fs vorliegt. Der fluidgefüllte Körper 2 erfährt jedoch, durch die Dämpfung des Dämpfungskörpers 8, nur die effektive Kraft Fe, die geringer ist als die Schlagkraft Fs (in Figur 1 ist die effektive Kraft Fe zur leichteren Übersicht versetzt dargestellt).

Der Dämpfungskoeffizient c ist in der Regel von den Materialeigenschaften und den verwendeten Dicken der eingesetzten Materialien des Schlaghandschuhes 1 abhängig und in der Regel auch nicht linear, sondern kann je nach Schlagkraft Fs variieren. So kann der Dämpfungskoeffizient bei demselben Schlaghandschuh 1 für eine Schlagkraft von 1 kN beispielsweise 15 % betragen und für eine Schlagkraft von 2 kN beispielsweise 18 % betragen (Werte willkürlich angenommen). Der Dämpfungskoeffizient c sollte daher für eine jeweilige Schlagkraft Fs angegeben werden.

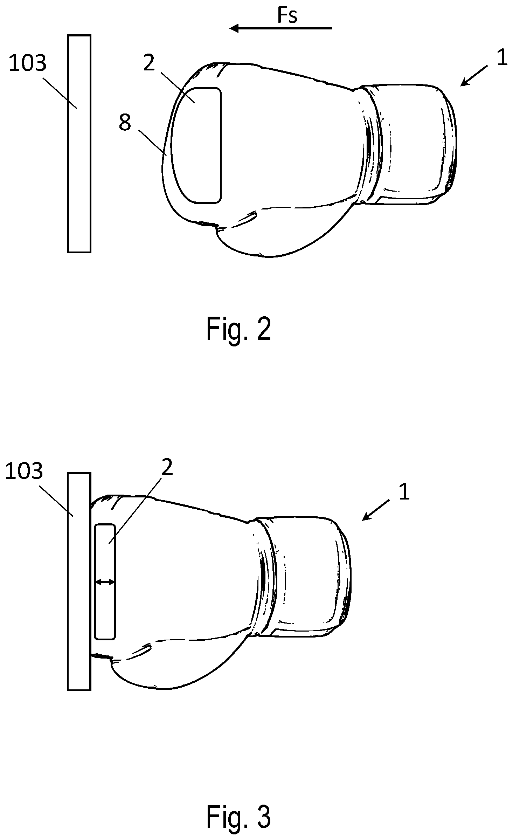

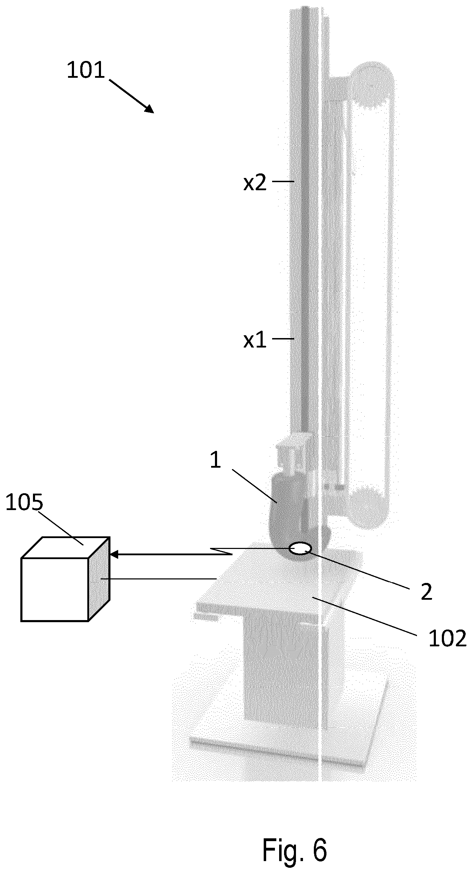

Die Bestimmung des Dämpfungskoeffizienten c kann im einfachsten Fall durch eine Simulation mittels eines Computers ermittelt werden, wenn die Materialeigenschaften der Komponenten des Schlaghandschuhes 1 und dessen interner Aufbau bekannt sind. Man kommt jedoch im Wesentlichen zum selben Ergebnis, wenn man den Dämpfungskoeffizienten c empirisch bestimmt, z.B. mit einem Prüfstand 101 wie in Figur 6 gezeigt. Der Prüfstand 101 umfasst optional eine im Wesentlichen horizontal angeordnete Kraftmessplatte 102, die Kraftmesswerte misst und ausgibt (oder einfach nur eine starre Platte 103 wie in den Figuren 2 und 3 dargestellt ohne weitere Funktionen), und zumindest zwei Haltepositionen x1, x2. Die optionale Kraftmessplatte 102 kann einen Sensorbereich von z.B. 5 kN aufweisen, da dies der größten erwarteten Kraftmesswert ist. Im Schlaghandschuh 1 wird üblicherweise eine vorbestimmte Masse von z.B. 3 kg angeordnet. Im dargestellten Beispiel befinden sich die Haltepositionen x1, x2 in unterschiedlichen Abständen vertikal über der Kraftmessplatte 102. Wird der Schlaghandschuh 1 nun zu einer der Haltepositionen x1, x2 verbracht und fallengelassen, wird dieser durch die Schwerkraft in Richtung der Kraftmessplatte 102 beschleunigt. Durch die unterschiedlichen Abstände der Haltepositionen x1, x2 zur Kraftmessplatte 102 wird der Schlaghandschuh 1 mit einer unterschiedlichen Geschwindigkeit auf die Kraftmessplatte 102 auftreffen, sodass ein Fallenlassen von den beiden Haltepositionen x1, x2 zu unterschiedlichen Schlagkräften Fs führen wird. Der Prüfstand 101 könnte naturgemäß auch anders ausgeführt werden, z.B. mittels einer vorbestimmten Beschleunigung des Schlaghandschuhes 1 in einer horizontalen Richtung, z.B. wenn der Schlaghandschuh 1 durch eine Feder oder einen Motor beschleunigt wird.

Der Prüfstand 101 ermöglicht, dass eine vorbestimmte Schlagkraft Fs am Schlaghandschuh 1 anliegen kann, die durch die Masse und Höhe der Haltepositionen x1, x2 ermittelt oder über die Kraftmessplatte 102 gemessen werden kann. Gleichzeitig kann der Druck im Schlaghandschuh 1 durch den Drucksensor 3 gemessen werden. Die effektive Kraft Fe kann in der Folge durch Messwerte des Drucksensors 3 durch die Formel Fe = p*A ermittelt werden. In der Folge kann auch der Dämpfungskoeffizient c durch die Formel Fe = (1-c)*Fs ermittelt werden.

Die oben erläuterten Ausführungen (sowohl bezüglich der numerischen Bestimmung als auch der empirischen Bestimmungen) sind in erster Näherung ausreichend, jedoch kann auch ein Ausdehnungskoeffizient β des fluidgefüllten Körpers 2 mitberücksichtigt werden. Der Ausdehnungskoeffizient β beschreibt die Ausdehnung des fluidgefüllten Körpers 2 bei einer Krafteinwirkung, sodass sich die Oberfläche des fluidgefüllten Körpers 2 verändern kann. Unter Berücksichtigung des Ausdehnungskoeffizienten β kann die effektive Kraft Fe durch die Formel Fe = (1-c+β)*Fs ermittelt werden. Da der Ausdehnungskoeffizient β jedoch in der Regel geringer als der Dämpfungskoeffizient c ist, kann der Ausdehnungskoeffizient β in ersten Näherungen auch vernachlässigt bzw. als β = 0 angesetzt werden.

Die Figuren 2 und 3 zeigen typische Verformungen des Schlaghandschuhes 1 bei einem Schlag auf eine ebene Fläche 103 (wie z.B. der Kraftmessplatte 102 oder einer starren Platte des beschriebenen Prüfstandes 101). Die ebene Fläche 103 könnte auch durch einen Boxsack gebildet werden, der durch seinen großen Durchmesser eine im Wesentlichen ebene Fläche bildet. Die gezeigten Verformungen treten sowohl Schlaghandschuhen 1 mit fluidgefülltem Körper 2 auf, die nach dem Stand der Technik oder gemäß der vorliegenden Erfindung konstruiert sind. Figur 2 zeigt den fluidgefüllten Körper 2 während der Beschleunigung, d.h. vor dem Auftreffen auf die ebene Fläche 103, d.h. im Wesentlichen ohne externe Krafteinwirkung, an dem ein Ruhedruck p0 (z.B. 1 bar) im fluidgefüllten Körper vorliegt. Der fluidgefüllte Körper 2 kann als im Wesentlichen unverformt bezeichnet werden.

Figur 3 zeigt den Schlaghandschuh 1 von Figur 2 beim Auftreffen auf die ebene Fläche 103, d.h. während die Schlagkraft Fs von z.B. 5 kN an der Aufprallfläche 9 anliegt. Durch die ebene Fläche 103 wird die Kraft gleichmäßig auf den fluidgefüllten Körper 2 übertragen, sodass dieser im Wesentlichen gleichmäßig gequetscht wird. Hierbei handelt es sich um einen Idealfall, der in Trainingssituationen und bei Versuchen mittels eines Prüfstandes 101 vorliegt. Diese Situation wird aber auch regelmäßig in echten Kampfsituationen erreicht, wenn z.B. ein Körpertreffer vorliegt, wobei der Körper die ebene Fläche 103 bildet.

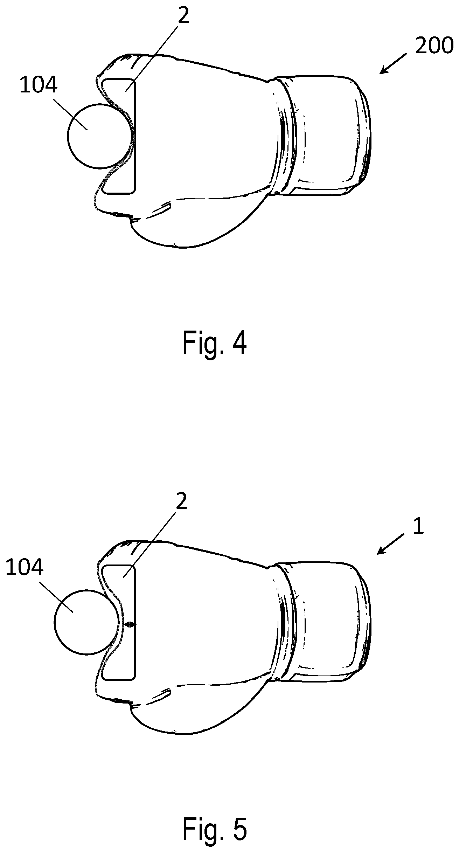

Es sollte ersichtlich sein, dass es bei einer derartigen Quetschung zwischen zwei im Wesentlichen ebenen Flächen nie dazu kommen wird, dass sich die zwei in Aufprallrichtung gegenüberliegenden Seiten des fluidgefüllten Körpers 2 berühren. Es ist jedoch eine Erkenntnis der Erfindung, dass sich diese Situation bei einem Schlaghandschuh nach dem Stand der Technik anders verhält, wenn der Schlaghandschuh auf eine unebene Fläche wie einen Unterarm oder einen Zylinder 104 mit einem Durchmesser vom 7 cm (der die Form eines Unterarms annähert) auftritt. Diese Situation ist in Figur 4 gezeigt.

Aus Figur 4 ist ersichtlich, dass es bei einem willkürlich gefertigten Schlaghandschuh 200 dazu kommt, dass sich die eintreffende Kraft nicht auf die gesamte Oberfläche des fluidgefüllten Körpers 2 verteilen kann, sondern nur auf einen Teilbereich dessen. Dadurch wird der fluidgefüllte Körpers 2 nur lokal gequetscht, bis es dazu kommt, dass sich die zwei in Aufprallrichtung gegenüberliegenden Seiten des fluidgefüllten Körpers 2 berühren. In der Folge liegt im fluidgefüllten Körper 2 jedoch kein Druck mehr vor, der repräsentativ für die eintreffende Schlagkraft Fs ist. Dieses Problem bzw. dessen Ursache wurde lange nicht erkannt und wird in den Schlaghandschuhen nach dem Stand der Technik nicht korrigiert, da das Phänomen des vollständigen Durchdrückens des fluidgefüllten Körpers 2 nicht mit freiem Auge ersichtlich ist.

Figur 5 zeigt, dass der erfindungsgemäß hergestellte Schlaghandschuh 1 derart ausgestaltet ist, dass es nicht zu einem Berühren der zwei in Aufprallrichtung gegenüberliegenden Seiten des fluidgefüllten Körpers 2 kommt, selbst wenn der Schlaghandschuh 1 mit einer Kraft von 5 kN auf eine Mantelfläche eines im Wesentlichen unverformbaren Zylinders mit einem Durchmesser vom 7 cm trifft.

An dieser Stelle sei festgehalten, dass die Kraft von 5 kN in diesem Beispiel als sogenannte vorbestimmte Kraft angesehen wird, d.h. der Schlaghandschuh 1 soll derart ausgelegt sein, dass er bei 5 kN zuverlässige Messergebnisse liefert. Die vorbestimmte Kraft könnte auch geringer, z.B. 4 kN, 3 kN oder 2,5 kN, oder größer, z.B. 6 kN, gewählt werden. In den folgenden Beispielen ist die vorbestimmte Kraft mit 5 kN gewählt, könnte aber auch allgemeiner als zumindest 2,5 kN angenommen werden.

Unter der oben aufgestellten Bedingung ist es dem Fachmann ein leichtes, den erfindungsgemäßen Schlaghandschuh 1 zu konstruieren, z.B. indem ein höherer Dämpfungskoeffizient c und/oder ein geringerer Ausdehnungskoeffizient β als im Stand der Technik herangezogen wird. Insbesondere kann der Dämpfungskoeffizient c des Schlaghandschuhs 1 bei einer auf die Aufprallfläche auftreffenden Kraft von 5 kN zumindest 20 %, bevorzugt zumindest 30 % betragen und/oder der Ausdehnungskoeffizient β des fluidgefüllten Körpers bis zu 5 %, bevorzugt bis zu 3 % oder besonders bevorzugt bis zu 1 % betragen.

Um einen hohen Dämpfungskoeffizienten c zu erzielen, kann der Fachmann beispielsweise ein anderes, besser dämpfendes Material für den Schaumstoffkörper 11 heranziehen, ein zusätzliches Material wie eine Trennschicht in den Schaumstoffkörper 11 einbringen und/oder den Abstand zwischen der Aufprallfläche 9 und dem fluidgefüllten Körper 2 erhöhen - insbesondere höher gewählt werden, als in Figur 1 ersichtlich ist.

Um einen geringen Ausdehnungskoeffizienten β zu erzielen, kann der fluidgefüllte Körper beispielsweise aus einem weniger dehnbaren Material gefertigt werden.

Es können weitere Überlegungen einfließen, um zu erzielen, dass es unter den spezifizierten Bedingungen nicht zu einem Berühren der zwei in Aufprallrichtung gegenüberliegenden Seiten des fluidgefüllten Körpers 2 kommt. Beispielsweise kann der Abstand zwischen der Aufprallfläche 9 und dem fluidgefülltem Körper 2 größer ausgeführt werden, als dies bei Schlaghandschuhen gemäß dem Stand der Technik der Fall ist, einerseits, da dies wie oben erläutert den Dämpfungskoeffizienten c erhöht und andererseits, um das Eindringvolumen des Zylinders 104 in den fluidgefüllten Körper 2 zu verringern.

Das maximal erlaubte Eindringvolumen Vx des Zylinders 104 in den fluidgefüllten Körper 2 kann berechnet werden als Vx = Vz/2+dz*hz*(hpad-dz/2-hrest). Hierbei ist:
Vz das Zylindervolumen mit einer an der Aufprallfläche angenommenen Zylinderhöhe hz, dz der Zylinderdurchmesser,
hz die an der Aufprallfläche angenommene Zylinderhöhe hz normal zur Aufprallrichtung und zum Zylinderdurchmesser,
hpad die Dicke des fluidgefüllten Körpers vor einer Krafteinwirkung (z.B. die Distanz von der Unterseite und Oberseite des fluidgefüllten Körpers in Aufprallrichtung), und
hrest die Restdicke des fluidgefüllten Körpers 2 bei Krafteinwirkung in Aufprallrichtung.

Gemäß dem Gesetz von Boyle-Mariotte kann nun die Gleichung V0/Vy = ppad/p0 aufgestellt werden. Hierbei ist:
Vx das genannte Eindringvolumen,
Vy das Restvolumen, wobei Vy = V0-Vx, wobei V0 das Volumen des fluidgefüllten Körpers 2 vor einer Krafteinwirkung ist,
ppad der maximale Druck im fluidgefüllten Körper 2 während des Kontaktes mit dem Ziel, und
p0 der genannte Ruhedruck, üblicherweise 1 bar.

Der Druck ppad im fluidgefüllten Körper 2 während des Schlages kann wiederum berechnet werden aus ppad = Fe/Az. Hierbei ist:
Fe die effektive Kraft, die am fluidgefüllten Körper 2 anliegt, und sich wie oben erläutert berechnet als Fe = (1-c+β)*Fs, und
Az die gedachte Kontaktfläche des Zylinders 104 am fluidgefüllten Körper 2 während des Schlags, z.B. überschlagsmäßig Az = dz*hz.

Es versteht sich, dass die obigen Formeln weiter verfeinert werden können, z.B. wenn die Geometrie des fluidgefüllten Körpers 2 genauer beschrieben wird. Weiters versteht es sich, dass die Formel dahingehend abgewandelt werden kann, dass nicht die gesamte Hälfte des Zylinders eindringt, sondern nur ein entsprechendes Kreissegment der Grundfläche in der Berechnung zu tragen käme.

Die voranstehenden Formeln umfassen die erfindungsgemäße Bedingung, dass die zwei in Aufprallrichtung gegenüberliegenden Seiten des fluidgefüllten Körpers 2 berührungsfrei vorliegen, wenn der Schlaghandschuh 1 mit der Aufprallfläche 9 mit einer Kraft von 5 kN auf den genannten Zylinder 104 auftrifft, d.h. die Restdicke hrest des fluidgefüllten Körpers 2 bei Krafteinwirkung ist größer Null. Vorteilhaft ist, wenn der Schlaghandschuh 1 derart dimensioniert wird, dass die Restdicke hrest des fluidgefüllten Körpers 2 bei einer Krafteinwirkung von 5 kN zumindest 1 mm oder zumindest 3 mm beträgt.

In einem Beispiel können die geometrischen Maße V0, hz, Vz, dz, hpad, Az als gegeben angesehen werden. Weiters können die beispielhaften Werte p0 = 1 bar, Fs = 4,7 kN angenommen werden. Wenn nun als Randbedingung aufgestellt wird, dass sich die gegenüberliegenden Seiten des fluidgefüllten Körpers 2 nur bis auf hrest = 0,1 cm nähern sollen, kann ein Eindringvolumen Vx errechnet werden. Damit die Gleichung V0/Vy = ppad/p0 erfüllt ist, müssen der Dämpfungskoeffizienten c und der Ausdehnungskoeffizient β entsprechend gewählt werden, z.B. mit c = 50 % und β = 5 %.

Insbesondere ist aus den obigen Formeln ersichtlich, dass die erfindungsgemäßen Bedingungen erzielt werden, wenn die effektive Kraft besonders klein ist, was dadurch erzielt werden kann, wenn der Dämpfungskoeffizient c besonders groß gewählt wird und der Ausdehnungskoeffizient β besonders klein. Weiters kann durch eine Formgestaltung und Anordnung des fluidgefüllten Körpers 2 innerhalb des Schlaghandschuhes 1 das Verhältnis V0/Vy angepasst werden.

Es ist ersichtlich, dass es dem Fachmann freisteht, eine Vielzahl an Parametern anzupassen, um die erfindungsgemäße Bedingung zu erfüllen. In der Praxis bietet sich an, dass der Fachmann einen Schlaghandschuh 1 gemäß den Grundrissen der obigen Lehre herstellt und danach testet (validiert), ob dieser die Eigenschaft aufweist, dass die zwei in Aufprallrichtung gegenüberliegenden Seiten des fluidgefüllten Körpers 2 berührungsfrei vorliegen, wenn der Schlaghandschuh 1 mit der Aufprallfläche mit einer Kraft von 5 kN auf eine Mantelfläche eines im Wesentlichen unverformbaren Zylinders 104 mit einem Durchmesser vom 7 cm auftrifft.

Um einen Schlaghandschuh 1 zu validieren, d.h. um zu testen, dass die in Aufprallrichtung gegenüberliegenden Seiten bei einem Schlag mit 5 kN auf den genannten Zylinder 104 tatsächlich berührungsfrei vorliegen, kann wie folgt vorgegangen werden.

Erstens wird ein Druck ermittelt, der im fluidgefüllten Körper erwartet wird, wenn der Schlaghandschuh 1 mit der genannten Kraft von 5 kN auf den genannten Zylinder 104 auftrifft. Dieses Ermitteln des erwarteten Drucks kann auf mehrere Arten erfolgen. Beispielsweise kann der Druck numerisch ermittelt werden, indem der Dämpfungskoeffizient c des Schlaghandschuhs, die erwartete Aufprallfläche A des Zylinders 104 auf dem fluidgefüllten Körper 2 und optional auch der Ausdehnungskoeffizient β durch einen Fachmann geschätzt werden. Der erwartete Druck kann dann als p = F(1-c+β)/A geschätzt werden, wobei F = 5 kN.

Der erwartete Druck kann aber auch empirisch bestimmt werden, z.B. wenn der Schlaghandschuh 1 zuerst mit 5 kN auf eine ebene Fläche 103 geschlagen wird und der Druck gemessen wird (es sollte erwartet werden, dass unabhängig von der Form des Objekts dieselbe Schlagkraft zu zumindest ähnlichen Druckmesswerten führt). Alternativ kann der erwartete Druck bestimmt werden, indem zuerst ein Referenzschlag mit einer geringeren Kraft als 5 kN auf den genannten Zylinder 104 erfolgt, wobei die geringere Kraft derart gewählt wird, dass sich die in Aufprallrichtung gegenüberliegenden Seiten des fluidgefüllten Körpers jedenfalls nicht berühren, z.B. bei im Wesentlichen 3 kN. Da sich die erwartete Aufprallfläche A des Zylinders 104 auf dem fluidgefüllten Körper 2 nicht oder nur unwesentlich verändern wird, wird ein bestimmbarer Zusammenhang zwischen Druck und Kraft erwartet, wodurch der gemessene Druckwert für die geringere Kraft auf die Kraft von 5 kN extrapoliert werden kann.

Nachdem oder bevor der erwartete Druck bestimmt wurde, erfolgt der Schritt des Schlagens des Schlaghandschuhes 1 mit der genannten Kraft von 5 kN auf den genannten Zylinder 104 und Messen des Drucks im fluidgefüllten Körper 2. Dies (und auch die Schläge zum empirischen Ermitteln des erwarteten Drucks) kann mittels des genannten Prüfstandes 101 erfolgen.

Nachdem der erwartete Druck bei 5 kN bei einem Schlag auf den Zylinder 104 und der gemessene Druck bei 5 kN bei einem Schlag auf den Zylinder 104 vorliegen, kann der Schlaghandschuh 1 validiert werden, d.h. die beiden Werte werden miteinander verglichen, z.B. mittels einer Auswerteeinheit 105, welche die Messwerte des Drucksensors 2 empfängt und auch mit der Kraftmessplatte 102 verbunden sein kann, um die gemessene Schlagkraft Fs zu bestätigen. Wenn der erwartete Druck im Wesentlichen dem gemessenen Druck entspricht, kann darauf geschlossen werden, dass sich die zwei in Aufprallrichtung gegenüberliegenden Seiten des fluidgefüllten Körpers beim Schlag mit 5 kN auf den Zylinder 104 nicht berührt haben. Es liegt somit ein Schlaghandschuh 1 mit den erfindungsgemäßen Eigenschaften vor. Wenn der erwartete Druck und der gemessene Druck jedoch weit auseinanderliegen, kann darauf geschlossen werden, dass sich die zwei in Aufprallrichtung gegenüberliegenden Seiten des fluidgefüllten Körpers beim Schlag mit 5 kN auf den Zylinder 104 berührt haben. Es liegt somit kein Schlaghandschuh mit den erfindungsgemäßen Eigenschaften vor, sondern ein Schlaghandschuh 200 wie in Figur 4 gezeigt.

Da die Druckmesswerte im fluidgefüllten Körper 2 in der Praxis de facto kaum mit der Schlagkraft korrelieren werden, wenn sich die gegenüberliegenden Seiten des fluidgefüllten Körpers 2 berühren, kann das Kriterium, dass der erwartete Druck im Wesentlichen dem gemessenen Druck entsprechen soll, weit ausgelegt werden, z.B. als +/-10% oder auch als +/-20%. Daher kann auch die Schätzung der genannten Werte zum numerischen Ermitteln äußerst grob erfolgen.

Die Figuren 7 bis 9 zeigen die auftretenden Beschleunigungswerte ax, ay, az bei einem Schlag mit dem Schlaghandschuh 1, wobei die Schlagkraft Fs = 5 kN beträgt. Auf der vertikalen Achse ist die Beschleunigung in Einheiten von g eingetragen, wobei g = 9,81 m/s². Auf der horizontalen Achse ist ein Zeitverlauf eingetragen, wobei der Aufprall des Schlags bei ca. 0,72 Sekunden beginnt. Bei dem Schlag, für den die Beschleunigungswerte dargestellt sind, traf der Schlaghandschuh 1 auf eine ebene Fläche 103, wobei dieselben oder zumindest ähnliche Beschleunigungswerte bei einem Schlag auf einen Zylinder 104 mit den genannten Eigenschaften erwartet werden. Der Beschleunigungswert ay wurde entlang der Schlagrichtung gemessen und die Beschleunigungswerte ax, az in orthogonalen Richtungen normal zur Schlagrichtung, siehe auch das Koordinatensystem in Figur 1.

An dieser Stelle sei angemerkt, dass dieser Beschleunigungsverlauf, der nach dem Auftreffen des Schlaghandschuhes 1 auf ein Ziel auftritt, bei den Schlaghandschuhen 200 aus dem Stand der Technik nicht gemessen wird. Zwar umfasst z.B. auch der Schlaghandschuh der WO 2020/041806 einen Beschleunigungssensor, jedoch wird dieser dazu eingesetzt, die Bewegung der Hand während eines Schlages ("während der Schlagausführung") nachzuverfolgen. Jedoch ist der dort beschriebene Beschleunigungssensor nur ein herkömmlicher Beschleunigungssensor und es wird insbesondere festgehalten, dass der dort gezeigte Beschleunigungssensor nicht dazu geeignet ist, aus der Beschleunigung während dem Aufprall eine Kraft abzuleiten.

Ein Problem der in Schlaghandschuhen des Standes der Technik verbauten Beschleunigungssensoren ist insbesondere, dass diese in der Regel ein Teil herkömmlicher IMUs sind und üblicherweise nur Negativbeschleunigungen von maximal 16 g (pro Richtung) aufzeichnen können. IMUs sind deshalb relevant, da sie neben der linearen Beschleunigung auch Drehraten aufzeichnen, was zur Verfolgung der Hand während der Schlagausführung notwendig ist. Aus den Verläufen der Figuren 7 bis 9 ist jedoch ersichtlich, dass derartige Beschleunigungssensoren nicht ausreichen, um die Spitzen der Beschleunigungen adäquat zu bestimmen, da diese in einem Bereich von 50 g bis 64 g bzw. achsenübergreifend sogar etwas darüber z.B. 71 g liegen. Eine derart genaue Bestimmung ist im Stand der Technik auch nicht notwendig, da bei einer Verfolgung der Hand eine Messung der Beschleunigung im Bereich von bis zu 16 g ausreichend ist.

In einem weiteren Aspekt der Erfindung wird nun jedoch ein Hochbeschleunigungssensor 4' eingesetzt, der Beschleunigungen von zumindest 64 g pro Richtung messen kann. Dieser kann Teil einer IMU sein, aber besonders bevorzugt ist der Hochbeschleunigungssensor 4' zusätzlich zu einer IMU vorgesehen, die einen herkömmlichen Beschleunigungssensor aufweist, der z.B. Beschleunigungen von maximal 16 g messen kann.

Wenn der Hochbeschleunigungssensor 4' gesondert von der IMU ausgeführt ist, hat dies insbesondere auch den Vorteil, dass der Drehratensensor der der IMU dazu eingesetzt werden kann, die Schwerkraft aus den Beschleunigungsdaten des Hochbeschleunigungssensors 4' adäquat wegzurechnen. In anderen Worten können die Messdaten des Hochbeschleunigungssensors 4' und des Drehratensensors der IMU verknüpft werden, um die Beschleunigungswerte des Schlaghandschuhes 1 zu bestimmen, was z.B. über eine bzw. die Recheneinheit 3' stattfinden kann.

Die mittels des Hochbeschleunigungssensors 4' bestimmten Beschleunigungswerte können dazu eingesetzt werden, um alternativ oder zusätzlich zum fluidgefüllten Körper 2 mit Drucksensor 3 eine Schlagkraft zu bestimmen. Es sei festgehalten, dass eine über den Hochbeschleunigungssensors 4' ermittelte Schlagkraft Fs zwar aussagekräftig ist, aber in der Regel ungenauer ist als eine über den Drucksensor 3 bestimmte Schlagkraft Fs.

Zur Bestimmung der Schlagkraft Fs über den Hochbeschleunigungssensor 4' kann eine effektive Masse geschätzt und mit den Beschleunigungsmesswerten des Hochbeschleunigungssensors 4' multipliziert werden, um die Schlagkraft Fs zu bestimmen. Die effektive Masse kann auch empirisch gemessen und dann mittels statistischer Verfahren (bsp. Machine Learning) genutzt werden, um sich an die Kraft anzunähern. Die derart über den Hochbeschleunigungssensor 4' bestimmte Schlagkraft kann als Referenzwert angesehen werden, z.B. um eine mittels des Drucksensors 3 gemessene Druckkraft zu verifizieren. Wenn der Referenzwert z.B. innerhalb einer Toleranz von 10 %, 20 % oder 30 % der durch den Drucksensor 3 bestimmten Schlagkraft Fs liegt, kann darauf geschlossen werden, dass sich die in Aufprallrichtung gegenüberliegenden Seiten des fluidgefüllten Körpers 2 nicht berührt haben. Sollte der Referenzwert jedoch außerhalb der genannten Toleranz liegen, kann darauf geschlossen werden, dass die Messwerte des Drucksensors 3 nicht aussagekräftig sind, z.B. da sich die in Aufprallrichtung gegenüberliegenden Seiten des fluidgefüllten Körpers 2 berührt haben oder da eine andere Art eines Aufpralls vorlag, für die der fluidgefüllte Körper 2 nicht ausgelegt ist, z.B. ein seitlicher Schlag mit dem Schlaghandschuh 1 oder ein Handrückenschlag. Zusammengefasst wird die Schlagkraft bevorzugt auf Basis der vom Drucksensor 3 gelieferten Daten bestimmt, wenn der Referenzwert innerhalb der genannten Toleranz liegt und anderenfalls kann der Referenzwert selbst als Schlagkraft herangezogen werden.

Weiters können die vom Hochbeschleunigungssensor 4' gelieferten Daten zur genaueren Schlagerkennung (über beispielsweise Machine Learning oder Decision Tree Statistiken) dienen, da mit dem Hochbeschleunigungssensor 4' auch eine genaue Aufprallrichtung festgestellt werden kann (bei einer klassischen IMU sind meist mehrere Achsen überbeansprucht bzw. haben Plateaubildungen, sodass diese eine Messbereichsüberschreitung erfahren, die zu einem gravierenden Messfehler führt).

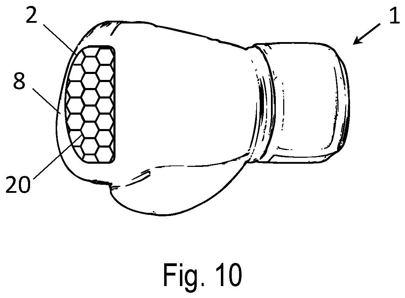

Figur 10 zeigt eine besonders bevorzugte Ausführungsform, bei der eine Stützstruktur 20 im Inneren des fluidgefüllten Körpers 2 vorliegt. Die Stützstruktur 20 übt einen Widerstand aus, wenn der fluidgefüllte Körper 2 zusammengedrückt wird, sodass die Stützstruktur 20 den Dämpfungskoeffizienten c des Schlaghandschuhes 1 erhöht. Die Stützstruktur 20 ist derart ausgestaltet, sodass sich das im fluidgefüllten Körper 2 befindliche Fluid weiterhin ungestört in diesem ausbreiten kann und dadurch die Druckmessung nicht beeinflusst wird. Die Stützstruktur 20 ist hierzu beispielsweise offenporig ausgestaltet. In der dargestellten Ausführungsform in Figur 10 ist der fluidgefüllte Körper 2 mit einer wabenförmigen Stützstruktur 20 dargestellt, was sich in der Praxis besonders bewährt hat. In dieser Ausführungsform berühren sich die zwei gegenüberliegenden Seiten des fluidgefüllten Körpers mittelbar, wenn die Stützstruktur 20 bis auf ein Maximum zusammengedrückt ist. d.h. es könnte auch definiert werden, dass der Schlaghandschuh 1 derart ausgebildet ist, dass die zwei in Aufprallrichtung gegenüberliegenden Seiten des fluidgefüllten Körpers berührungsfrei und ohne eine maximal zusammengedrückte Stützstruktur 20 (sofern vorhanden) und/oder in einem Mindestabstand von z.B. 1 mm, 2 mm, 3 mm oder mehr vorliegen (bei diesem Mindestabstand wird die Stützstruktur 20 jedenfalls noch nicht maximal zusammengedrückt sein), wenn der Schlaghandschuh mit der Aufprallfläche mit einer vorbestimmten Kraft, die z.B. mindestens 2,5 kN oder mindestens 5 kN beträgt, auf eine Mantelfläche eines im Wesentlichen unverformbaren Zylinders mit einem Durchmesser von 7 cm auftrifft. Wenn keine Stützstruktur 20 zwischen den in Aufprallrichtung gegenüberliegenden Seiten vorliegt, kann definiert werden, dass die zwei in Aufprallrichtung gegenüberliegenden Seiten des fluidgefüllten Körpers jedenfalls berührungsfrei vorliegen, wenn der Schlaghandschuh mit der Aufprallfläche mit einer vorbestimmten Kraft, die mindestens 2,5 kN beträgt, auf eine Mantelfläche eines im Wesentlichen unverformbaren Zylinders mit einem Durchmesser von 7 cm auftrifft. Unabhängig davon, ob eine Stützstruktur 20 vorliegt, könnte auch definiert werden, dass die zwei in Aufprallrichtung gegenüberliegenden Seiten des fluidgefüllten Körpers in einem Mindestabstand von z.B. 1 mm, 2 mm, 3 mm oder mehr vorliegen, wenn der Schlaghandschuh mit der Aufprallfläche mit einer vorbestimmten Kraft, die mindestens 2,5 kN beträgt, auf eine Mantelfläche eines im Wesentlichen unverformbaren Zylinders mit einem Durchmesser von 7 cm auftrifft.

## Patentansprüche

1. Schlaghandschuh (1) umfassend einen Dämpfungskörper (8), einen fluidgefüllten Körper (2) und einen Drucksensor (3) zur Messung des hydrostatischen Drucks im fluidgefüllten Körper (2),
wobei zumindest ein Teil des Dämpfungskörpers (8) zwischen einer Aufprallfläche (9) des Schlaghandschuhs (1) und dem fluidgefüllten Körper (2) vorliegt,
wobei der Schlaghandschuh (1) weiters eine Recheneinheit (3') umfasst oder mit einer Recheneinheit (3') verbindbar ist, die dazu ausgebildet ist, den vom Drucksensor (3) gemessenen Druckmesswerten Kraftwerte zuzuordnen,
**dadurch gekennzeichnet, dass**
der Schlaghandschuh (1) derart ausgebildet ist, dass die zwei in Aufprallrichtung gegenüberliegenden Seiten des fluidgefüllten Körpers (2) berührungsfrei vorliegen, wenn der Schlaghandschuh (1) mit der Aufprallfläche (9) mit einer vorbestimmten Kraft, die mindestens 2,5 kN beträgt, auf eine Mantelfläche eines im Wesentlichen unverformbaren Zylinders (104) mit einem Durchmesser von 7 cm auftrifft.

2. Schlaghandschuh (1) nach Anspruch 1, wobei die vorbestimmte Kraft im Wesentlichen 2,5 kN, im Wesentlichen 3 kN, im Wesentlichen 4 kN oder im Wesentlichen 5 kN beträgt.

3. Schlaghandschuh (1) nach Anspruch 1 oder 2, wobei der Schlaghandschuh (1) derart ausgebildet ist, dass sich die zwei in Aufprallrichtung gegenüberliegenden Seiten des fluidgefüllten Körpers (2) berühren, wenn der Schlaghandschuh (1) mit der Aufprallfläche (9) mit einer weiteren vorbestimmten Kraft, die größer als die erstgenannte vorbestimmte Kraft ist und beispielsweise mindestens 6 kN beträgt, auf die Mantelfläche des genannten Zylinders (104) auftrifft.

4. Schlaghandschuh (1) nach einem der Ansprüche 1 bis 3, wobei eine Stützstruktur (20) innerhalb des fluidgefüllten Körpers (2) vorliegt.

5. Schlaghandschuh (1) nach einem der Ansprüche 1 bis 4, wobei der Dämpfungskoeffizient des Schlaghandschuhs (1) bei einer auf die Aufprallfläche (9) auftreffenden Kraft, die der vorbestimmten Kraft entspricht, zumindest 20 %, bevorzugt zumindest 30 %, beträgt.

6. Schlaghandschuh (1) nach einem der Ansprüche 1 bis 5, wobei der Ausdehnungskoeffizient des fluidgefüllten Körpers bis zu 5 %, bevorzugt bis zu 3 % oder besonders bevorzugt bis zu 1 % beträgt.

7. Schlaghandschuh (1) nach einem der Ansprüche 1 bis 6, wobei der Schlaghandschuh (1) derart ausgebildet ist, dass die zwei in Aufprallrichtung gegenüberliegenden Seiten des fluidgefüllten Körpers (2) mit einem Abstand von zumindest 1 mm oder zumindest 3 mm vorliegen, wenn der Schlaghandschuh (1) mit der Aufprallfläche (9) mit der vorbestimmten Kraft auf den genannten Zylinder (104) auftrifft.

8. Schlaghandschuh (1) nach einem der Ansprüche 1 bis 7, wobei der Schlaghandschuh (1) einen Hochbeschleunigungssensor (4') umfasst, mit dem Beschleunigungsmesswerte von zumindest 64 g messbar sind.

9. Schlaghandschuh (1) nach Anspruch 8, wobei die genannte Recheneinheit (3') oder eine weitere Recheneinheit dazu ausgebildet ist, aus Messwerten des Hochbeschleunigungssensors (4') während eines Aufpralls zusammen mit einer geschätzten effektiven Masse einen Referenzwert zu bestimmen, und wobei die genannte Recheneinheit (3') oder die weitere Recheneinheit bevorzugt weiters dazu ausgebildet ist, den über den Drucksensor (3) bestimmten Kraftwert als Schlagkraft (Fs) auszugeben, wenn der über den Hochbeschleunigungssensor (4') ermittelte Referenzwert innerhalb einer Toleranz von 10 %, 20 % oder 30 % des über den Drucksensor (3) bestimmten Kraftwerts liegt, und den Referenzwert als Schlagkraft (Fs) auszugeben, wenn der Referenzwert außerhalb der genannten Toleranz liegt.

10. Verfahren zum Validieren eines Schlaghandschuhes (1) nach einem der vorhergehenden Ansprüche, mit einem Dämpfungskörper (8), einem fluidgefüllten Körper (2) und einem Drucksensor (3) zur Messung des hydrostatischen Drucks im fluidgefüllten Körper (2), umfassend die Schritte:
- numerisches oder empirisches Ermitteln eines erwarteten Drucks, der im fluidgefüllten Körper (2) erwartet wird, wenn der Schlaghandschuh (1) mit einer vorbestimmten Kraft, die mindestens 2,5 kN beträgt, auf eine Mantelfläche eines im Wesentlichen unverformbaren Zylinders (104) mit einem Durchmesser vom 7 cm auftrifft,
- Schlagen des Schlaghandschuhes (1) mit der genannten Kraft auf den genannten Zylinder (104) und Messen des Drucks im fluidgefüllten Körper (2) mittels des Drucksensors (3), und
- Vergleichen, ob der gemessene Druck im Wesentlichen dem erwarteten Druck entspricht.

11. Verfahren nach Anspruch 10, wobei der Schritt des numerischen Ermittelns des erwarteten Drucks folgende Schritte umfasst:
- Schätzen eines Dämpfungskoeffizienten (c) des Schlaghandschuhs (1), der erwarteten Aufprallfläche des Zylinders (104) auf dem fluidgefüllten Körper (102) und optional auch eines Ausdehnungskoeffizienten (β) des fluidgefüllten Körpers (2) umfasst,
- Ermitteln des erwarteten Drucks, bevorzugt anhand der Formel p = F(1-c+β)/A, wobei F die vorbestimmte Kraft ist, c der Dämpfungskoeffizient ist, β der Ausdehnungskoeffizient ist und A die erwartete Aufprallfläche des Zylinders (104) auf dem fluidgefüllten Körper (2) ist.

12. Verfahren nach Anspruch 10, wobei der Schritt des empirischen Ermittelns des erwarteten Drucks folgende Schritte umfasst:
- Schlagen des Schlaghandschuhes (1) mit der genannten Kraft auf eine ebene Fläche (103) und Messen des Drucks im fluidgefüllten Körper (2) zum Erhalt des erwarteten Drucks.

13. Verfahren nach Anspruch 10, wobei der Schritt des empirischen Ermittelns des erwarteten Drucks folgende Schritte umfasst:
- Schlagen des Schlaghandschuhes (1) mit der einer Testkraft auf den genannten Zylinder (104), wobei die Testkraft geringer als die vorbestimmte Kraft ist, bevorzugt geringer als 4 kN oder geringer als 3 kN, und Messen des Drucks im fluidgefüllten Körper (2) zum Erhalt eines Testdruckmesswertes,
- Ermitteln des erwarteten Drucks auf Basis des Testdruckmesswerts.

14. Verfahren nach Anspruch 10, wobei der Schlaghandschuh (1) einen Hochbeschleunigungssensor (4') umfasst, mit dem Beschleunigungsmesswerte von zumindest 64 g messbar pro Achse sind, und aus Messwerten des Hochbeschleunigungssensors (4') während eines Aufpralls zusammen mit einer geschätzten effektiven Masse ein Referenzwert bestimmt wird, wobei der Schritt des empirischen Ermitteln des erwarteten Drucks das Bestimmen des Referenzwertes während dem Schritt des Schlagens mit der genannten Kraft auf den genannten Zylinder (104) umfasst.

## Claims

1. A boxing glove (1) comprising a cushioning body (8), a fluid-filled body (2) and a pressure sensor (3) for measuring the hydrostatic pressure in the fluid-filled body (2), wherein at least a portion of the damping body (8) is situated between an impact surface (9) of the impact glove (1) and the fluid-filled body (2),
wherein the impact glove (1) further comprises a computing unit (3') or is connectable to a computing unit (3') which is designed to assign force values to the pressure readings measured by the pressure sensor (3),
**characterised in that**
the impact glove (1) is designed such that the two sides of the fluid-filled body (2) opposite one another lie contact-free in the direction of impact when the impact glove (1) strikes, with its impact surface (9), a lateral surface of a substantially non-deformable cylinder (104) with a diameter of 7 cm.

2. Impact glove (1) according to claim 1, wherein the predetermined force is substantially 2.5 kN, substantially 3 kN, substantially 4 kN or substantially 5 kN.

3. Impact glove (1) according to claim 1 or 2, wherein the impact glove (1) is configured such that the two sides of the fluid-filled body (2) opposite one another in the direction of impact come into contact when the impact glove (1) strikes the outer surface of said cylinder (104) with the impact surface (9) with a further predetermined force which is greater than the first-mentioned predetermined force and amounts, for example, to at least 6 kN.

4. Impact glove (1) according to any one of claims 1 to 3, wherein a support structure (20) is present within the fluid-filled body (2).

5. Impact glove (1) according to any one of claims 1 to 4, wherein the damping coefficient of the impact glove (1) is at least 20%, preferably at least 30%, when a force corresponding to the predetermined force impacts the impact surface (9).

6. Impact glove (1) according to any one of claims 1 to 5, wherein the expansion coefficient of the fluid-filled body is up to 5%, preferably up to 3% or more preferably up to 1%.

7. Impact glove (1) according to any one of claims 1 to 6, wherein the impact glove (1) is designed such that the two sides of the fluid-filled body (2) opposite one another in the direction of impact are spaced apart by at least 1 mm or at least 3 mm when the impact glove (1) strikes the said cylinder (104) with the impact surface (9) with the predetermined force.

8. Impact glove (1) according to any one of claims 1 to 7, wherein the impact glove (1) comprises a high-acceleration sensor (4') capable of measuring acceleration values of at least 64 g.

9. Impact glove (1) according to claim 8, wherein the said computing unit (3') or a further computing unit is configured to determine a reference value from measured values of the high-acceleration sensor (4') during an impact, together with an estimated effective mass, and wherein said computing unit (3') or the further computing unit is preferably further configured to output the force value determined via the pressure sensor (3) as an impact force (Fs) if the reference value determined via the high-acceleration sensor (4') lies within a tolerance of 10%, 20% or 30% of the force value determined via the pressure sensor (3), and to output the reference value as an impact force (Fs) if the reference value lies outside the said tolerance.

10. A method for validating an impact glove (1) according to one of the preceding claims, comprising a damping body (8), a fluid-filled body (2) and a pressure sensor (3) for measuring the hydrostatic pressure in the fluid-filled body (2), comprising the steps of:
- numerically or empirically determining an expected pressure that is expected in the fluid-filled body (2) when the impact glove (1) strikes a lateral surface of a substantially non-deformable cylinder (104) with a diameter of 7 cm with a predetermined force of at least 2.5 kN,
- impacting the impact glove (1) against said cylinder (104) with said force and measuring the pressure in the fluid-filled body (2) by means of the pressure sensor (3), and
- comparing whether the measured pressure substantially corresponds to the expected pressure.

11. A method according to claim 10, wherein the step of numerically determining the expected pressure comprises the following steps:
- Estimating a damping coefficient (c) of the impact glove (1), the expected impact area of the cylinder (104) on the fluid-filled body (102) and, optionally, also an expansion coefficient (β) of the fluid-filled body (2),
- determining the expected pressure, preferably using the formula p = F(1-c+β)/A, where F is the predetermined force, c is the damping coefficient, β is the expansion coefficient, and A is the expected impact area of the cylinder (104) on the fluid-filled body (2).

12. A method according to claim 10, wherein the step of empirically determining the expected pressure comprises the following steps:
- striking a flat surface (103) with the impact glove (1) using said force and measuring the pressure within the fluid-filled body (2) to obtain the expected pressure.

13. A method according to claim 10, wherein the step of empirically determining the expected pressure comprises the following steps:
- striking the impact glove (1) with a test force against said cylinder (104), wherein the test force is less than the predetermined force, preferably less than 4 kN or less than 3 kN, and measuring the pressure in the fluid-filled body (2) to obtain a test pressure reading,
- determining the expected pressure on the basis of the test pressure measurement value.

14. A method according to claim 10, wherein the impact glove (1) comprises a high-acceleration sensor (4') capable of measuring acceleration values of at least 64 g per axis, and a reference value is determined from measurement values of the high-acceleration sensor (4') during an impact together with an estimated effective mass, wherein the step of empirically determining the expected pressure comprises determining the reference value during the step of striking said cylinder (104) with said force.

## Revendications

1. Gant de frappe (1) comprenant un corps d'amortissement (8), un corps rempli de fluide (2) et un capteur de pression (3) destiné à mesurer la pression hydrostatique dans le corps rempli de fluide (2),
au moins une partie du corps d'amortissement (8) étant située entre une surface d'impact (9) du gant de frappe (1) et le corps rempli de fluide (2),
le gant de frappe (1) en outre comprenant une unité de calcul (3') ou pouvant être relié à une unité de calcul (3') conçue pour attribuer des valeurs de force aux relevés de pression mesurés par le capteur de pression (3),
**caractérisé en ce que**
le gant de frappe (1) est conçu de telle sorte que les deux faces du corps rempli de fluide (2) qui sont opposées dans la direction de l'impact existent sans contact, lorsque le gant de frappe (1) percute contre une surface latérale d'un cylindre (104) sensiblement indéformable d'un diamètre de 7 cm avec la surface d'impact (9) sous une force prédéterminée d'au moins 2,5 kN.

2. Gant de frappe (1) selon la revendication 1, dans lequel la force prédéterminée est sensiblement de 2,5 kN, sensiblement de 3 kN, sensiblement de 4 kN ou sensiblement de 5 kN.

3. Gant de frappe (1) selon la revendication 1 ou 2, dans lequel le gant de frappe (1) est conçu de telle sorte que les deux faces du corps rempli de fluide (2) qui sont opposées dans la direction de l'impact se touchent, lorsque le gant de frappe (1) percute contre la surface latérale dudit cylindre (104) avec la surface d'impact (9) sous une force prédéterminée supplémentaire qui est supérieure à la première force prédéterminée et qui est, par exemple, d'au moins 6 kN.

4. Gant de frappe (1) selon l'une quelconque des revendications 1 à 3, dans lequel une structure de support (20) est prévue à l'intérieur du corps rempli de fluide (2).

5. Gant de frappe (1) selon l'une quelconque des revendications 1 à 4, dans lequel le coefficient d'amortissement du gant de frappe (1) est d'au moins 20 %, de préférence d'au moins 30 %, lorsqu'une force correspondant à la force prédéterminée percute contre la surface d'impact (9).

6. Gant de frappe (1) selon l'une quelconque des revendications 1 à 5, dans lequel le coefficient de dilatation du corps rempli de fluide peut aller jusqu'à 5 %, de préférence jusqu'à 3 %, ou plus préférablement jusqu'à 1 %.

7. Gant de frappe (1) selon l'une quelconque des revendications 1 à 6, dans lequel le gant de frappe (1) est conçu de telle sorte que les deux faces du corps rempli de fluide (2) qui sont opposées dans la direction de l'impact soient situées à une distance d'au moins 1 mm ou d'au moins 3 mm, lorsque le gant de frappe (1) percute contre ledit cylindre (104) avec la surface d'impact (9) sous la force prédéterminée.

8. Gant de frappe (1) selon l'une quelconque des revendications 1 à 7, dans lequel le gant de frappe (1) comprend un capteur de haute accélération (4') permettant de mesurer des relevés d'accélération d'au moins 64 g.

9. Gant de frappe (1) selon la revendication 8, dans lequel ladite unité de calcul (3') ou une autre unité de calcul est conçue pour déterminer une valeur de référence à partir des relevés du capteur de haute accélération (4') lors d'un impact, conjointement à une masse effective estimée, et dans lequel, de préférence, ladite unité de calcul (3') ou l'autre unité de calcul est en outre conçue pour émettre la valeur de force déterminée par le capteur de pression (3) en tant que force de frappe (Fs), lorsque la valeur de référence obtenue par le capteur de haute accélération (4') se situe dans une plage de tolérance de 10 %, 20 % ou 30 % de la valeur de force déterminée par le capteur de pression (3), et pour émettre la valeur de référence en tant que force de frappe (Fs), lorsque la valeur de référence est hors de ladite plage de tolérance.

10. Procédé de validation d'un gant de frappe (1) selon l'une quelconque des revendications précédentes, comprenant un corps d'amortissement (8), un corps rempli de fluide (2) et un capteur de pression (3) destiné à mesurer la pression hydrostatique dans le corps rempli de fluide (2), comprenant les étapes suivantes:
- déterminer numériquement ou empiriquement une pression attendue qui est anticipée dans le corps rempli de fluide (2), lorsque le gant de frappe (1) percute contre une surface latérale d'un cylindre (104) sensiblement indéformable d'un diamètre de 7 cm sous une force prédéterminée d'au moins 2,5 kN,
- frapper le gant de frappe (1) sur ledit cylindre (104) avec ladite force et mesurer la pression dans le corps rempli de fluide (2) à l'aide du capteur de pression (3), et
- comparer si la pression mesurée correspond sensiblement à la pression attendue.

11. Procédé selon la revendication 10, dans lequel l'étape de déterminer numériquement la pression attendue comprend les étapes suivantes:
- estimer un coefficient d'amortissement (c) du gant de frappe (1), de la surface d'impact attendue du cylindre (104) sur le corps rempli de fluide (102), et éventuellement aussi un coefficient de dilatation (β) du corps rempli de fluide (2),
- déterminer la pression attendue, de préférence à l'aide de la formule p = F(1-c+β)/A, dans laquelle F est la force prédéterminée, c est le coefficient d'amortissement, β est le coefficient de dilatation, et A est la surface d'impact attendue du cylindre (104) sur le corps rempli de fluide (2).

12. Procédé selon la revendication 10, dans lequel l'étape de déterminer empiriquement la pression attendue comprend les étapes suivantes:
- frapper le gant de frappe (1) sur une surface plane (103) avec ladite force et mesurer la pression dans le corps rempli de fluide (2) afin d'obtenir la pression attendue.

13. Procédé selon la revendication 10, dans lequel l'étape de déterminer empiriquement la pression attendue comprend les étapes suivantes:
- frapper le gant de frappe (1) sur ledit cylindre (104) avec une force d'essai, la force d'essai étant inférieure à la force prédéterminée, de préférence inférieure à 4 kN ou inférieure à 3 kN, et mesurer la pression dans le corps rempli de fluide (2) afin d'obtenir un relevé de pression d'essai,
- déterminer la pression attendue sur la base du relevé de pression d'essai.

14. Procédé selon la revendication 10, dans lequel le gant de frappe (1) comprend un capteur de haute accélération (4') permettant de mesurer des relevés d'accélération d'au moins 64 g par axe, et une valeur de référence est déterminée à partir des relevés du capteur de haute accélération (4') lors d'un impact, conjointement à une masse effective estimée, l'étape de déterminer empiriquement la pression attendue comprend déterminer la valeur de référence lors de l'étape de frapper sur ledit cylindre (104) avec ladite force.
